# EUROPEAN PATENT SPECIFICATION

(11) **EP 3 244 826 B1**
(45) Date of publication and mention of the grant of the patent: **13.04.2022**
(21) Application number: 16737169.9
(22) Date of filing: 14.01.2016
(51) Int. Cl.: A61C 13/01, A61C 8/00

(54) **DENTAL BRIDGE SYSTEM**
ZAHNBRÜCKENSYSTEM
SYSTÈME DE BRIDGE

(30) Priority: 14.01.2015 US 201562103123 P
(43) Date of publication of application: 22.11.2017
(73) Proprietor: Poetya Solutions Limited, Victoria, Mahe (SC)
(72) Inventor: BERGER, Uzi, 4541523 Hod Hasharon (IL)
(74) Representative: Dall'Olio, Christian
(86) International application number: PCT/IL2016/050043
(87) International publication number: WO 2016/113737

(56) References cited:
- US-A- 5 556 280
- US-A1- 2006 223 029
- US-A1- 2006 223 029
- US-A1- 2013 167 380
- US-A1- 2013 167 380
- US-A1- 2013 244 208
- US-A1- 2014 178 839
- US-A1- 2014 178 839

## Description

### TECHNOLOGICAL FIELD

The present disclosure is directed to a dental bridge system. More particularly, the presently disclosed subject matter relates to a dental bridge system having a readily detachably-attachable superstructure.

### BACKGROUND

US 2014/0178839 discloses a removable dental implant bridge system configured for rigid detachable mounting of an implant removable bridge over a mini support bar, which in turn is configured for fixedly securing to the jaw bone of an individual, in a fashion facilitating fast and easy mounting yet fixedly supporting the implant removable bridge so as to obtain a sturdy and secure engagement to the mini support bar, and however suited for easy removal, wherein bar is substantially received with a teeth mimicking portion of the implant removable bridge and where the mini support bar is configured with scalloping at least at a labial face and a bottom face thereof.

US 2006/0223029 discloses a removable denture system comprising a support beam fixedly attached to the individual's alveolar ridge above the mucous membrane by a plurality of dental implants, and a denture generally conforming with the dental parameters of the individual and integrated with a supper-structure. The superstructure comprises at least a portion shaped in confirmation with the support beam, and a denture locking arrangement for removably though fixedly articulating the denture to the support beam preventing unintentional disengagement of the denture.

US 2013/0167380 discloses a system including a method and associated structures creates efficiencies in the manufacture of prosthetic tooth support frameworks. Pre-manufactured teeth with matching internal keys are used in the setup of a patient prototype. Each key includes a shaft, a cervical platform, a retention knob and preferably at least one channel for the expulsion of excess adhesive fluid. The cervical platforms are shaped to provide intimate contact with a base of their respective tooth. The same tooth/key pairs are then used to make a framework pattern from the setup positioning. The pattern can be cast or scanned for direct machining to produce the finished framework.

### GENERAL DESCRIPTION

The disclosed subject matter is directed to a removable dental bridge system configured for fixedly yet detachable anchorage of a removable superstructure over a support bar, which in turn is configured for fixedly securing over a jaw bone of an individual, in a fashion facilitating fast and easy mounting, yet fixedly supporting the removable superstructure, so as to obtain a sturdy and secure engagement to the support bar, and however configured for easy and readily removal thereof.

The dental bridge system comprises a removable superstructure configured with a crown portion (i.e., an artificial teeth portion) generally conforming with dental parameters of the individual, and having a proximal face integrally formed with at least one bar-receiving groove shaped so as to snugly fit, at high precision, over at least a portion of a corresponding support bar, according to claim 1.

It is noted that the at least one bar-receiving groove is integral in that sense that it is machined out of the proximal face of the material, and wherein the support bar is manufactured to follow the shape of the groove, at high precision.

The visible layer is provided typically at outside, visible facing surfaces (e.g., except for the proximal face thereof), the visible layer mimicking the appearance of an individual's natural parameters. It is appreciated that the removable superstructure is functional (e.g., as far as bearing loads and mounting over the support bar), whilst the visible layer is non-functional, in that aspect, but rather is provided as an aesthetic layer.

The visible layer can be applied all over the removable superstructure or over portions thereof, by coating, adhering, fixation (e.g., by screws), etc. the visible layer can be made, for example, from zirconium, porcelain, composite materials, acrylic materials, ceramic materials, glass, silicon, etc., providing the required aesthetics as far as appearance (shape, size and, coloring) and also functional as far as speech, chewing, etc.

The visible layer can be a plurality of crowns (i.e., single coatings applied over tooth mimicking members of the crown portion) or one or more bridge portions, each comprising two or more integrated crowns applied over neighboring teeth of the mimicking members of the crown portion. It is appreciated that the visible layer can be applied over the entire crown portion or over selected portions thereof, e.g., typically but not restricted, at noticeable zones. Furthermore, the visible layer, can be applied over the removable superstructure in a variety of one or more techniques, e.g., bonding/curing a layer of material over the removable superstructure, adhering, screwing, etc.

The term *implants* as used herein throughout the specification and claims denotes *studs* and *fixture* (used interchangeably) fixedly secured within the respective jaw bone. It is appreciated that any form of fixture can be used, such as, subperiosteal implants, blade fixtures, and the like. A *'head portion'* projects through the gum and directly bears the support bar (i.e., using a one-piece implant, wherein the fixture is integrated with an abutment portion projecting above the gum), or indirectly, i.e., the head portion is an *abutment* secured over a head of the fixture.

The load applied through the removable superstructure while chewing is fully borne by the support bar and directed through the abutments to the implants (and further to the bone tissue), whilst the locking arrangement substantially does not bear any loads.

Furthermore, the tolerance between the at least one bar-receiving groove of the removable superstructure and the respective support bar is tight (i.e., high precision), so as to reduce, or substantially eliminate, any respective motion therebetween. However, removal of the bridge is facilitated substantially without the need of any tools.

The term *removable superstructure* as used herein the specification and claims denotes a crown portion, i.e., an integrated array of artificial teeth mimicking the teeth of an individual and integrally configured, at a proximal face thereof, with the at least one bar-receiving groove.

The term *crown portion* as used herein the specification and claims denotes a body portion of the teeth, i.e., a visible portion of the teeth extending above the gum line, mimicking the normally visible natural enamel portion of a tooth, extending above the gum line of an individual.

The term *mimicking* suggests that the array of artificial teeth of the removable superstructure and scalloping gingival strip, if applicable, follow the individual's anatomical parameters, such as shape, texture, size, color etc.

Depending on anatomical parameters of the individual, the removable superstructure can be configured with or without a skirt portion, i.e., a gum mimicking portion (at times referred to as an *'acrylic flange'* or *'buccal flange'),* and at times a narrow transition zone can extend, for improved aesthetics. Such a strip is hereby defined as a scalloping gingival strip and it mimics and merges with the individual's buccal gingival area in appearance and shape, i.e., as far as its scalloping shape, color and stippling thereof.

The at least one bar-receiving groove is configured for snug receiving the support bar, whereby the bar-receiving groove is configured for receiving and substantially concealing the support bar.

The geometry of the support bar is firstly dictated by, and derived out of the geometry of the bar-receiving groove and configured so as to be snugly received therein, and however adapted for mounting and securing over studs, or abutments.

Accordingly, the support bar is configured for fixedly securing to a jaw bone of an individual directly over fixtures or indirectly over abutments, the support bar shaped and configured for snugly fit, at high precision, over at least portions thereof, within a bar-receiving groove of a removable superstructure, and fully concealed by the removable superstructure.

It is appreciated that the support bar can be continuous or interrupted, and likewise, the bar-receiving groove can be continuous or interrupted, respectively. Likewise, the distal face of the support bar can be substantially flat or intermitted, and respectively, the distal wall of the bar-receiving groove can be substantially flat or intermitted, however wherein at the assembled position at least portions of the distal face of the support bar engage respective portions of the distal wall of the bar-receiving groove.

A method for applying an individual with an implant removable bridge (IRB) at a readily removably yet secured fashion is described, the method comprises the following steps:
- fixing several fixtures into a jawbone of the individual, each having an implant body fixedly received within the jawbone;
- obtaining a removable superstructure generally conforming with dental parameters of the individual, having a proximal surface formed with at least one bar-receiving groove, fully extending therewithin, the groove being shaped and configured so as to snugly accommodate, at high precision, a support bar, and further configured with a locking arrangement provided for releasably locking the removable superstructure to a support bar;
- obtaining a support bar configured for snug fitting within the bar-receiving groove of the removable superstructure;
- fixing the support bar over the head portion of the fixtures or over abutments secured to the fixtures;
- placing removable superstructure over the support bar such that the groove snugly bears, at high precision over at least portions of the support bar.

The method may further comprise the steps of locking/unlocking the removable superstructure over the support bar in position by virtue of one or more locking arrangements.

It is noted that the bar-receiving groove fully extends within the removable superstructure, and can be fixedly embedded therewithin (namely be an element of material applied within the implant removable bridge and integrated therein at a fixed fashion). Alternatively, the groove may be a receiving groove extending and formed within the proximal face of the removable superstructure, borne out of the removable superstructure.

Any one or more of the following features, designs and configurations can be applied to the bridge system or to any one of the other aspects subject of the present application, independently or in combinations thereof:
- A locking arrangement is provided for releasably locking the removable superstructure to the support bar, and comprising one or more locks for detachable locking of the removable superstructure to the support bar. The locks can be of any one or more types and are configured such that they do not bear any loads applied between the removable superstructure and the support bar, while chewing;
- The tolerance between the groove and the support bar is tight, at least at several positioning locations, so as to reduce, or substantially eliminate, any respective motion/movement therebetween. However, removal and mounting of the removable superstructure is easily facilitated substantially without the need of any tools, along a path of insertion (POI). According to other examples, tolerance between the groove and the support bar is tight substantially along their entire lengths;
- Positioning locations can be disposed along the support bar at locations corresponding with fixture arresting sites;
- The support bar can be configured with widened portions at the positioning locations;
- The positioning locations can be configured to extend at corresponding crown portions of the removable superstructure (rather than at a portion between teeth);
- The support bar is elevated from the gum, giving rise to a gap between the gum and a proximal surface of the support bar;
- The groove is configured with widened locations at location corresponding with the positioning locations of the support bar, the positioning locations extending at a crown portion of the removable superstructure (rather than at a portion between teeth);
- The support bar can be made of any rigid, metallic or non-metallic material (such as, for example, metals- gold, titanium, chrome-cobalt, different forms of zirconium, porcelain, plastic/ acrylic/ polymeric materials, composite materials, and combinations thereof, glass and carbon, and/or materials reinforced with glass or carbon fibers, natural stone, silicates, silicon, etc.);
- The removable superstructure is made of any rigid, metallic or non-metallic material (such as, for example, metals-gold, titanium, chrome-cobalt, different forms of zirconium, porcelain, plastic/ acrylic/ polymeric materials, composite materials, glass and carbon, and/or materials reinforced with glass or carbon fibers, natural stone, silicates, silicon, etc., and combinations thereof);
- According to one example, the removable superstructure can be made of a material offering both functionality as far as strength, and aesthetic capabilities, as fare as appearance, whereby the visible layer is integrally formed therewith, whereby applying crowns or abridge is redundant. Such material can be, for example, zirconium, silicon, ceramics, acrylics and any kind of polymeric materials;
- When the material of which the removable superstructure is a structural material, there is need to apply thereto a finishing layer mimicking the shape, size, color and texture of the natural teeth;
- The crown portion of the removable superstructure is a dental bridge , i.e., follows the individual's anatomical parameters, and conforming with resident natural teeth or artificial teeth of the individual such as shape, texture, color etc,. and is of substantially the same size of the individual's natural teeth;
- The crown portion of the removable superstructure (i.e., the artificial teeth portion) can be configured with substantially no real gaps between neighboring teeth, or such that narrow gaps extend, at distal portion between neighboring teeth, resembling a natural array of teeth;
- The removable superstructure can be devoid of a skirt portion , i.e., a gum mimicking portion (at times referred to as an *'acrylic flange')* and is configured for riding over or extending in close proximity with the natural gum of the individual;
- A narrow (i.e., short) transition strip (at times referred to as *'scalloping strip')*, can be configured at a proximal edge of the removable superstructure, i.e., at a region configured to extend over or in proximity to the gum; such a transition strip can be tinted and/or differently shaped/texturized/colored, in conformation with the gum of the individual. Such a strip is hereby defined as a scalloping gingival strip and it mimics and merges with the individual's buccal gingival area in appearance and shape, i.e., as far as its scalloping shape, color and stippling thereof;
- A proximal portion of the support bar, i.e., that portion extending in proximity to the natural gum of the individual, can be configured with a scalloping pattern, i.e., is shaped in conformity with anatomical shape of the individual's gum, so as not to show between an undulating pattern at the proximal edge of the removable superstructure;
- The groove of the removable superstructure can fully extend within removable superstructure;
- The groove of the removable superstructure is configured with a distal wall and sidewalls extending therefrom; the distal wall and sidewalls of the groove are configured such that at least portions thereof bear in surface contact against corresponding distal faces and side walls of the support bar, respectively;
- According to a configuration of the disclosure, only portions of side walls of the groove of the removable superstructure bear in surface contact over respective side walls of the support bar;
- A scalloping pattern of the scalloping gingival strip can coextend with a scalloping pattern of the removable superstructure, and together the scalloping pattern matches and merges with the anatomical shape of the individual's gum;
- The groove of the removable superstructure and the support bar can be configured such that their respective side walls are either parallel to a path of insertion (POI) or constitute an angle therewith ('retraction angle'); the angle extending between about 0° and 30°;
- The support bar and the groove of the removable superstructure can be configured with any cross-section, i.e., can be configured with straight or tapering side walls with respect to the path of insertion, and can be configured with a flat (planer) distal face, or the distal face can be arced (concave, convex). Likewise, the distal face of the support bar and /or the distal wall of the groove, can be configured as a flat surface or with elevated/depressed portions therealong;
- The support bar and the groove of the removable superstructure can be configured with different lateral projections corresponding grooves, for improved support of the removable superstructure over the support bar;
- The locking arrangement can comprise one or more locks configured for releasable locking engagement, at one or both of the removable superstructure and the support bar, the locks can be of any design, such as, for example: retractable pin locks, swivel-type locks, locators, or any other type of locking mechanism, such that substantially no loads are borne by the lock while chewing;
- The one or more locking mechanisms can be configured at any one or more locations of the bridge, e.g., at the posterior end of the bridge system and/or at any intermediate portions thereof, at the mesial portion of the bridge, etc.;
- The one or more locking mechanisms can be configured at a lingual and/or labial face (side walls) of the removable superstructure, or at a distal face thereof;
- Loads applied through the removable superstructure while chewing are fully borne by the support bar, and in turn directed to the fixtures (and further to the bone tissue). When retraction/extraction pin-type locks are used they substantially do not bear any loads (i.e., shear forces or compression forces are substantially eliminated); however, other types of locks can be utilized (setting as an example, a swivel lock), though the configuration is such that substantially no loads are borne by the lock while chewing. ;
- According to one particular example the one or more locks are a pin-type locks, each lock configured with a locking pin displaceable through either a rear face (lingual face) or a front face (labial face) of the removable superstructure, between a locked position in which it arrests a locking bore configured at a locking portion of the support bar, (wherein the removable superstructure is prevented from displacement about a path of insertion thereof), and an un-locked position where it is disengaged from the locking portion (and whereby the removable superstructure may be removed along its path of insertion);
- An ejection bore can extend across the support bar and in register through a labial (or lingual) face of the removable superstructure (and respectively through the groove), coaxial with the axially displaceable locking pin, to assist in displacing the pin into its unlocked position;
- The removable superstructure can be an anatomic framework, wherein the crown portion is configured with a plurality of supports projecting from the groove portion, the supports configured for fitting thereon a visible layer in the form of crowns and/or bridges; and
- The crown portion of the anatomic removable superstructure can resemble the teeth portion of the individual, prior to applying thereover a visible layer.

According to the presently disclosed subject matter, there is provided a dental bridge system comprising a superstructure and a support bar, the superstructure comprising a proximal face formed with at least one bar-receiving groove shaped so as to snugly receive therein at least a corresponding portion of the support bar; the superstructure further comprising a crown portion defining teeth-like members and having a structurally functional distally projecting inner core, coated by a visible layer configured to impart aesthetic qualities to the crown portion.

The superstructure comprise a plurality of distally-projecting crown supports and corresponding crowns, each comprising a portion of the inner core and being coated by a portion of the visible layer.

The inner core may be designed non-aesthetically.

The appearance of the inner core may be visually distinct from the coating.

The color of the inner core may be different from that of the coating.

The inner core may be made from a material comprising one or more selected from the group including zirconium, zirconium alloys, zirconium compounds, silicon, ceramic, acrylics, and polymeric materials.

The dental bridge system may be designed to be fit to an individual such that when the support bar is fully received within the groove, the superstructure extends to the gum line of the individual.

The dental bridge system may be designed to be fit to an individual such that when the support bar is fully received within the groove, the superstructure extends past the gum line of the individual. For example, the superstructure may fully cover the gingival mucosa of the individual.

The dental bridge system may further comprise a locking arrangement for locking (e.g., releasably) the superstructure to the support bar. The dental bridge may be configured such that loads applied to the superstructure are fully borne by the support bar directly, without applying a load on the locking arrangement.

The bar-receiving groove may receive therein the corresponding portion of the support bar with a low tolerance.

The superstructure may further comprise a gum-mimicking portion.

### BRIEF DESCRIPTION OF THE DRAWINGS

In order to better understand the subject matter that is disclosed herein and to exemplify how it may be carried out in practice, an embodiment will now be described, by way of nonlimiting examples only, with reference to the accompanying drawings, in which:
**Fig. 1A** is a proximal-labial perspective exploded view of a dental bridge system according to an example that is not part of the invention;
**Fig. 1B** is a rotated view of the dental bridge system illustrated in Fig. 1A;
**Fig. 2A** is an assembled view the dental bridge system illustrated in Fig. 1B;
**Fig. 2B** is a proximal view of the dental bridge system illustrated in Fig. 2A;
**Fig. 3A** is a distal-lingual perspective view of a removable superstructure according to an example that is not part of the invention;
**Fig. 3B** is a proximal view of the removable superstructure illustrated in Fig. 3A;
**Fig. 4A** is a distal-lingual perspective view of a support bar according to an example that is not part of the invention;
**Fig. 4B** is a proximal-labial view of the support bar illustrated in Fig. 4A;
**Fig. 5A** is a partially translucent lingual perspective view of the dental bridge system according to an example that is not part of the invention;
**Fig. 5B** is an exploded labial view of the dental bridge system illustrated in Fig. 5A;
**Fig. 5C** is a partially-sectioned side view of the dental bridge system illustrated in Fig. 5B;
**Fig. 5D** is an exploded perspective, partially sectioned view of a dental bridge system according to another example that is not part of the invention;
**Fig. 5E** is a local section taken along line V-V in Fig. 5D
**Fig. 6** is a vertical section along line VI-VI in Fig. 5A;
**Figs. 7A** and **7B** are local sectioned views through a locking mechanism, along line VII-VII in Fig. 5A, at an unlocked position and at a locked position, respectively;
**Fig. 8A** is a proximal-labial perspective view of an anatomic removable superstructure according to another example that is not part of the invention;
**Fig. 8B** is a distal-lingual perspective view of the anatomic removable superstructure of Fig. 8A;
**Fig. 8C** is a proximal view of the anatomic removable superstructure of Fig. 8A; and
**Fig. 9** is a perspective view of an anatomic removable superstructure according to the invention.

### DETAILED DESCRIPTION OF EMBODIMENTS

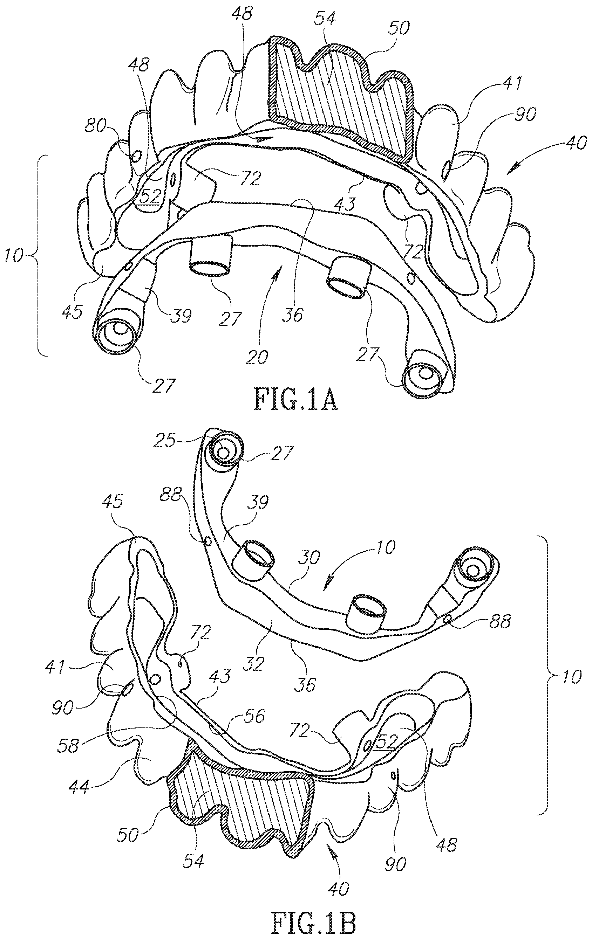

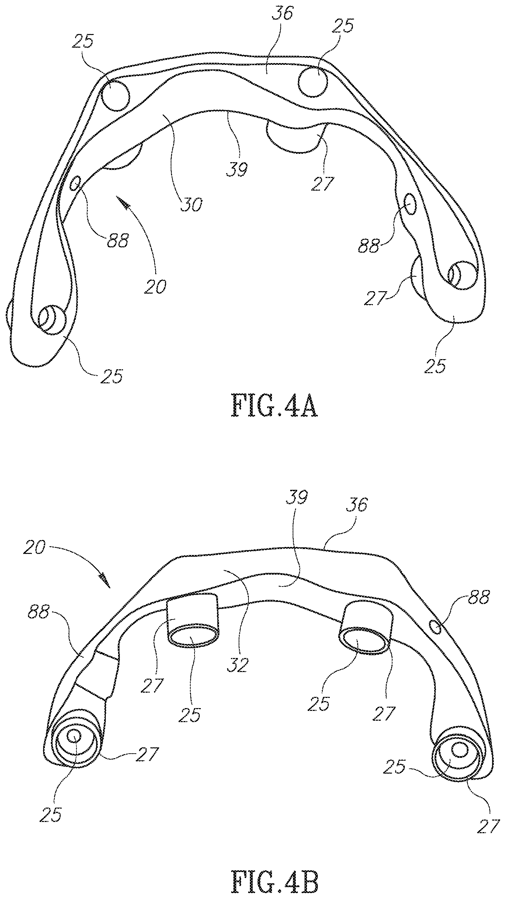

Attention is first directed to Figs. 1A through 4B illustrating a dental bridge system generally designated **10** , comprising a support bar **20** receivable within a superstructure **40.**

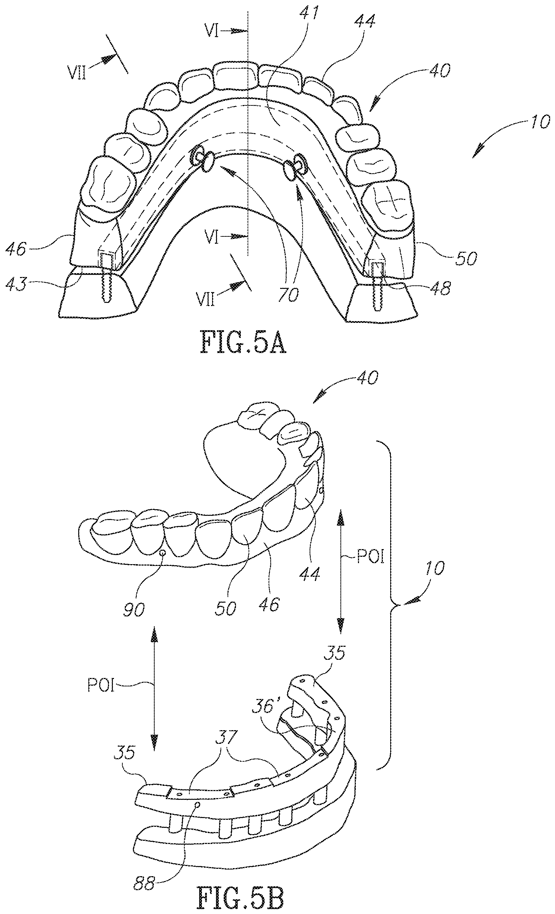

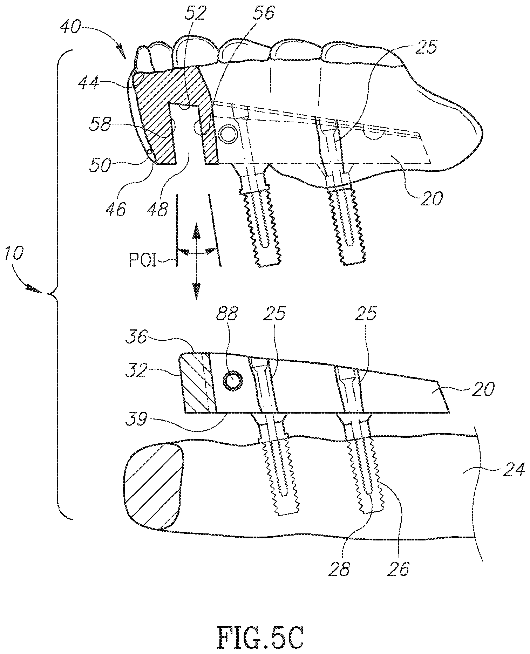

The support bar **20** is configured for fixedly securing to a jaw bone **24** (mandibular or maxillar) of an individual, i.e., to the individual's alveolar ridge above the gingival mucosa, for example as illustrated in Fig. 5A. The support bar **20** is secured by a plurality of dental implants **26** (for example as illustrated in Fig. 5C) received within bores **25** and secured to the jaw bone **24.** Suitable screws **28** may be provided to facilitate securing the support bar **20** to the dental implants **26.**

The support bar **20** follows the general arched shape of the jaw **24,** and is configured with a lingual (inside) face **30,** a labial (external) face **32,** a distal surface **36** and a proximal face **39.** The support bar **20** may be made of any rigid, metallic or non-metallic material (including, but not limited to, gold, titanium, chrome-cobalt, different forms of zirconium, porcelain, plastic, acrylic, or polymeric materials, composite materials, and combinations thereof, glass, carbon, materials reinforced with glass and/or carbon fibers, natural stone, silicates, silicon, etc.).

The distal surface **36** of the support bar **20** may be substantially flat and smooth over its entire length, as shown in the drawings. It should be appreciated, however, that the distal surface **36**' can be at least partially rough and have small projections and/or recesses therealong, e.g., as illustrated in Fig. 5B, formed with one or more depressed portions **37** disposed more proximally than the rest of the distal surface, with steps between the depressed portions **37** and adjacent areas of the distal surface **36**'. In addition, back portions **35** (i.e., those configured to lie over posterior portions of the jaw **24**) may be humped, i.e., extending more distally that the rest of the distal surface **36**'. A bar-receiving groove **48** (described below) of the removable superstructure **40** is correspondingly formed to receive the support bar **20** therewithin.

The support bar **20** may be configured to be fixedly secured to the individual's jaw bone **24** through an array of dental implants **26** fixedly secured within the respective jaw bone. A head portion of each dental implant **26** projects through the gum, constituting an abutment bearing the support bar, either directly (e.g., using a one-piece implant, wherein the fixture is integrated with an abutment portion projecting above the gum) or indirectly (e.g., wherein the head portion is an abutment secured over a head of the fixture).

As can further be seen, the support bar **20** may be further provided at its proximal face **39** with a plurality of proximally projecting positioning caps **27** (e.g., four, as illustrated in the accompanying drawings), corresponding with the bores **25** and configured for true-position mounting over the abutments.

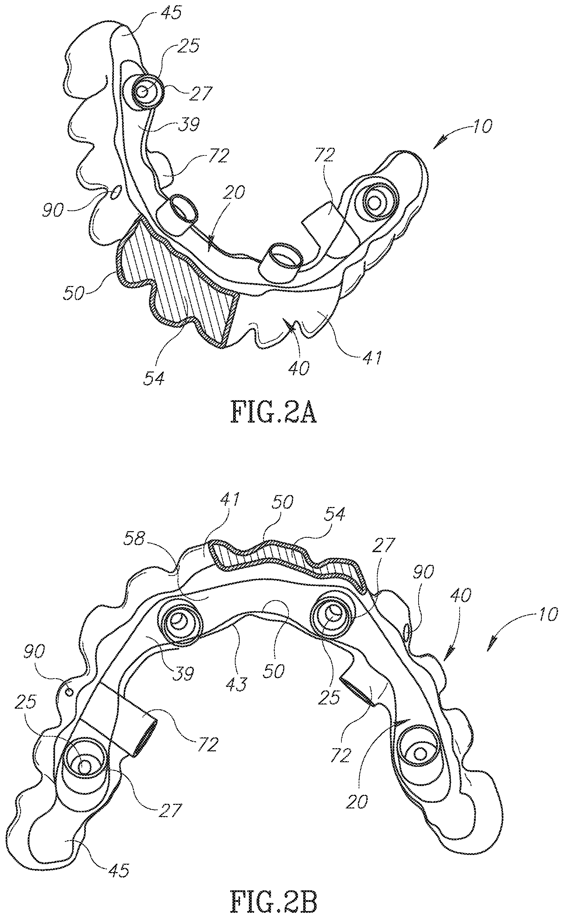

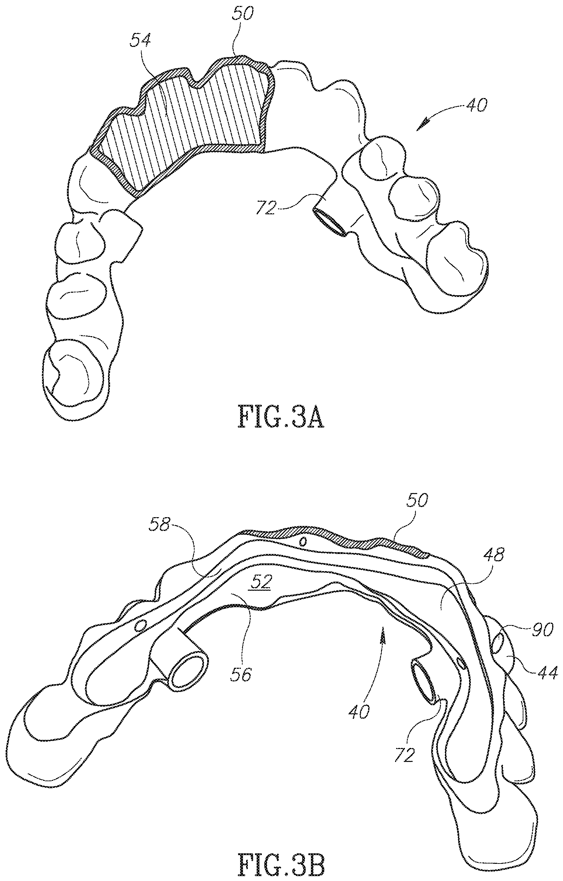

The dental bridge system **10** further comprises a removable superstructure generally designated **40** (seen separately in Figs. 3A and 3B). The removable superstructure **40** comprises a crown portion **44**, for example supported on a gum-mimicking portion **46** (indicated in Figs. 5A through 5C), constituting an artificial teeth portion and mimicking in shape and size the dental parameters of the individual. The removable superstructure **40** has a labial face **41**, a lingual face **43** and a proximal face **45**. The proximal face **45** is formed with a proximally-facing bar-receiving groove **48** being generally arced and designed (e.g., having a shape and size) so as to snugly fit, at high precision, over at least a portion of the corresponding support bar **20**. At the assembled position (e.g., as illustrated in Figs. 2A and 2B) it appears as if the support bar **20** is carved out of the proximal face of the removable superstructure **40**, with substantially zero tolerance, thereby eliminating any motion therebetween, except along a path of insertion (POI) as indicated in Figs. 5B and 5C.

The bar-receiving groove **48** comprises with a proximally-facing distal wall **52**, and a lingual surface **56** and labial surface **58** constituting sidewalls thereof, configured for substantially flush positioning over at least portions of, respectively, the distal surface **36**, lingual face **30** and a labial face **32** of the support bar **20**. At least the respective wall portions configured for mutual engagement at the mounted position are for smooth, and provide zero tolerance therebetween, however facilitate easy mounting and detaching of the removable superstructure **40** from the support bar **20**.

It is appreciated that the removable superstructure **40** may be configured for applying and removal from the support bar **20** along a path of insertion (POI), i.e., the axis along which the removable superstructure **40** is placed onto, or removed from, the support bar **20**, intersecting the occlusal plane of the individual's mouth.

As shown in Fig. 5C, the bar-receiving groove **48** of the removable superstructure **40** and the support bar **20** may be configured such that their respective side walls are either parallel to a path of insertion (POI) or constitute an angle therewith (a "retraction angle"), for example extending between about 0° and about 30°.

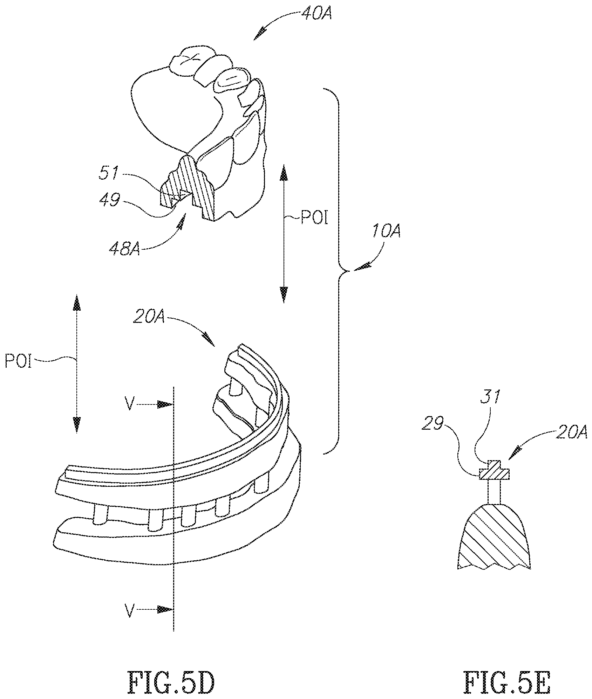

According to another example, illustrated in Figs. 5D and 5E, a dental bridge system **10A**, similar to that described above with reference to Figs. 1A through 5C, comprises a support bar **20A** and a removable superstructure **40A**, wherein the support bar **20A** is formed with a T-shaped cross section (best seen in Fig. 5E), i.e., having a wide, proximally-disposed base portion **29** and a narrow ridge portion **31** projecting distally therefrom, the ridge portion **31** extending along substantially the entire length of the support bar.

According to some modifications, the ridge portion **31** may extend partially along the length of the support bar **20A**, and/or may extend along several portions thereof (i.e., with gaps between adjacent portions).

A bar-receiving groove **48A** of the removable superstructure **40A** is formed with a base-receiving portion **49** and a ridge-receiving portion **51**, corresponding with respective portions **29** and **31** of the support bar **20A**, such that in the assembled position (not shown) of the dental bridge system **10A**, the groove **48A** of the removable superstructure **40A** snugly fits over the support bar **20A**.

According to other modifications, the support bar **20A** may be formed with different cross sections, e.g., triangular, domed, etc., with the bar-receiving groove **48A** being formed correspondingly. The above configuration may be facilitate, e.g., dental bridge systems according to the presently disclosed subject matter having a short section (e.g., suitable for fitting in individuals having small dental parameters).

The removable superstructure **40**, and the crown portion **44** thereof, may be made of any suitable rigid metallic or non-metallic material (e.g., gold, titanium, chrome-cobalt, zirconium compound and/or alloys, porcelain, plastic, acrylic, polymeric materials, composite materials, glass and/or carbon, materials reinforced with glass and/or carbon fibers, natural stone, silicates, silicon, etc., and combinations thereof).

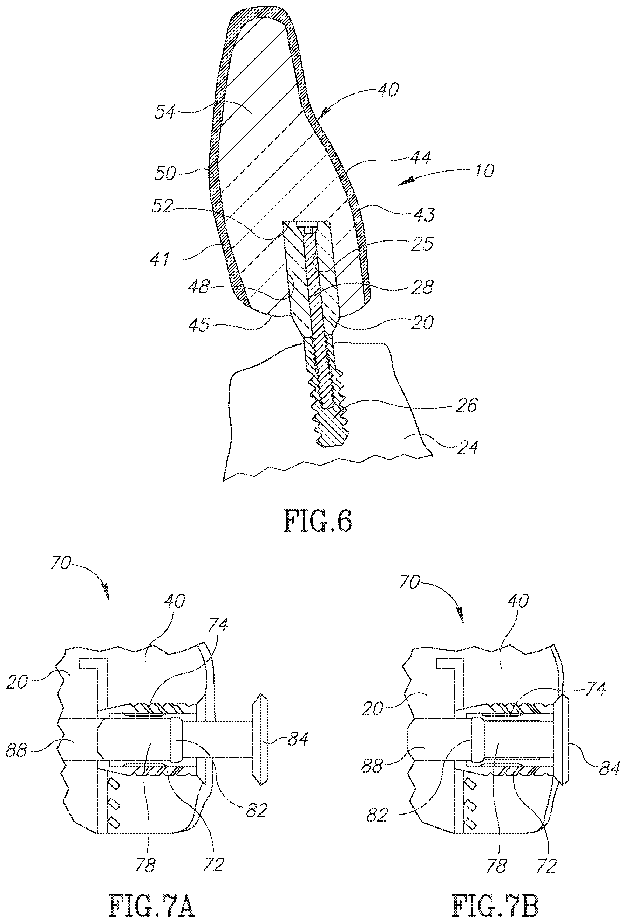

The crown portion **44** may be formed with a structurally functional (i.e., suited to bear loads typically borne by teeth; to perform the normal non-aesthetic functions of teeth, such as chewing, biting, etc.) inner core, coated by a visible layer **50** on its external faces (variously represented in cutaway views in Figs. 1A through 3B, and in Fig. 6). The inner core is made of a suitable material to facilitate the structural function, including, but not limited to zirconium and or alloys/compounds thereof, silicon, ceramic, acrylics, a suitable polymeric materials, etc. Such material can be, for example, zirconium, silicon, ceramics, acrylics and any kind of polymeric materials Accordingly, the inner core, when the dental bridge system is assembled, projects distally. The inner core may be a monolithic element as illustrated in Figs. 1A through 3B, i.e., wherein the structurally functional portion is a single piece, or with individually projecting members. According to some examples, the inner core comprises two or more partially monolithic elements, i.e., it comprises several elements, at least some of which are coated with the visible layer **50** to each mimic more than one tooth.

The visible layer **50** is provided on outside facing surfaces (e.g., excluding a proximal surface thereof which contacts the gum-mimicking portion **46**), and is designed to mimic natural parameters (e.g., color, texture, etc.) of the appearance of the individual's teeth. The removable dental bridge **40** may be integrally formed with the visible layer **50**, or the visible layer **50** can be applied over the surfaces of the removable dental bridge **40**. The visible layer **50** may be made of any suitable material, including, but not limited to, a polymeric material, acrylic, a composite material, porcelain, or any other suitable material or a combination thereof.

The removable superstructure **40** is configured for detachably mounting over the support bar **20**, as will be discussed hereinafter, and is personalized so as to conform with dental parameters of the individual. For example, the crown portion **44** thereof may be formed with a plurality of teeth resembling the shape, size, etc., of the natural teeth of the individual, and coated with visible layer **50** having a color, etc., resembling that of the natural teeth of the individual.

The superstructure **40,** e.g., the gum-mimicking portion **46** thereof, may be configured to extend slightly below the support bar when mounted thereon, e.g., to cover at least a portion of the gingival mucosa (the natural gum portion of the individual), to fully cover the gingival mucosa, or to not cover it at all (i.e., to stop at the gum line).

It will be appreciated that while the dental bridge system **10** is described above with reference to the accompanying drawings as covering the entire length (i.e., arc) of the alveolar ridge, it may be provided such that the support bar **20** and/or superstructure **40** thereof only extends partway along the length (for example if some of the teeth of the individual remain). • In addition, the support bar **20** and/or superstructure **40** may each comprise two or more pieces arranged along the length of the alveolar ridge.

The dental bridge system **10** may further comprise a locking arrangement, which is any suitable arrangement configured to releasably lock (i.e., selectively arrest) the superstructure **40** on the support bar **20** when received therein as described above. According to some modifications, the dental bridge system **10** is designed such that the locking arrangement is not subject to sheer forces while applying chewing forces on the dental bridge system.

Figs. 7A and 7B illustrate one example of such a locking arrangement, which is generally designated **70.** The locking arrangement **70** illustrated therein is a pin-type locking arrangement, and is designed, in its locked position, to not bear any loads applied to the superstructure **40,** for example owing to the bar-receiving groove **48** of the removable superstructure **40** bearing snugly over the support bar **20** with substantially zero tolerances therebetween.

The locking arrangement **70** comprises a housing **72** rigidly embedded within, or integrally formed with, the removable superstructure **40,** wherein the housing **72** comprises a sleeve **74** made of or corresponding an elastomeric or ceramic material. The locking arrangement further comprises a locking pin **78** formed with an annular displacement limiting ring **82** configured for snapping arrestment by the sleeve **74.** The pin **78** is displaceable between an unlocked position (Fig. 7A) and a locked position (Fig. 7B). The locking pin **78** is fitted with a substantially flat head portion **84** which at the locked position extends in close proximity with the lingual surface **43** of the removable superstructure **40,** thus causing minimal irritation to the individual, however facilitating retraction thereof, e.g., by the individual's fingernail. For that purpose, a small interstice may be provided between the inner surface of the head **84** and the lingual surface **43.** The locking pin **78** is fitted for snugly fitting within corresponding bore **88** configured in the respective support bar **20,** however, in a fashion wherein substantially no load is borne by the pin while at the locked position.

The removable superstructure **40** may comprise a through-going bore **90** extending through a face opposite to that of the locking arrangement **70** (typically in the labial face, though not restricted thereto). The bore **90** is disposed in register with the locking bore formed in the support bar, wherein in case of difficulty in extracting of the locking pin **78** a pointed article may be inserted through the opening (e.g., a paper clip or the like) to facilitate pushing the locking pin **78** in the lingual direction into its extracted/open position (Fig. 7A). The through-going bore **90** on the labial surface of the personalized denture may be formed and/or sized such that it is not readily apparent to a casual viewer.

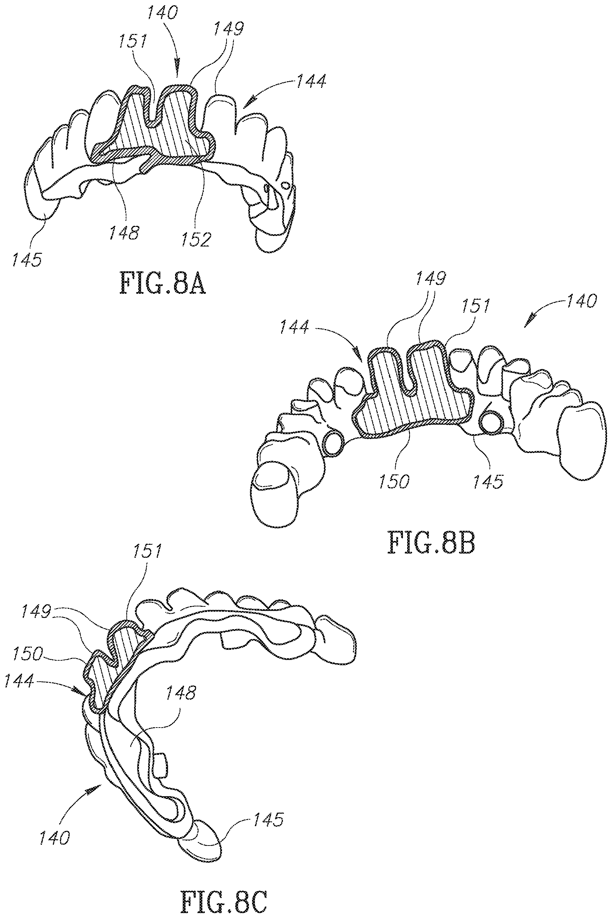

With reference now made to Figs. 8A to 8C there is illustrated a modification of a removable superstructure generally designated **140** similar to that disclosed in connection with the previous drawings and wherein like elements are designated with like reference numbers, however shifted by 100.

The removable superstructure generally designated **140** differs from removable superstructure **40** in that the crown portion **144,** being an artificial teeth portion and mimicking in shape and size the dental parameters of the individual is configured with spaced apart teeth-like members **149,** i.e., with narrow gaps **151** extending therebetween. The removable superstructure **140** is further provided at the proximal face **145** with an integral bar-receiving groove **148,** being generally arced and shaped and sized so as to snugly fit, at high precision, over at least a portion of the corresponding support bar **20,** as discussed herein above. Similar to examples discussed above, the removable superstructure **140** is coated with, or has applied thereto at external faces thereof, a visible layer **150** mimicking the appearance of an individual's natural parameters as far as color, texture, etc. in the drawings only a portion of the visible layer **150** is applied. The visible layer may be provided as described above with reference to the visible layer 50 illustrated in Figs. 1A through 3B and Fig. 6.

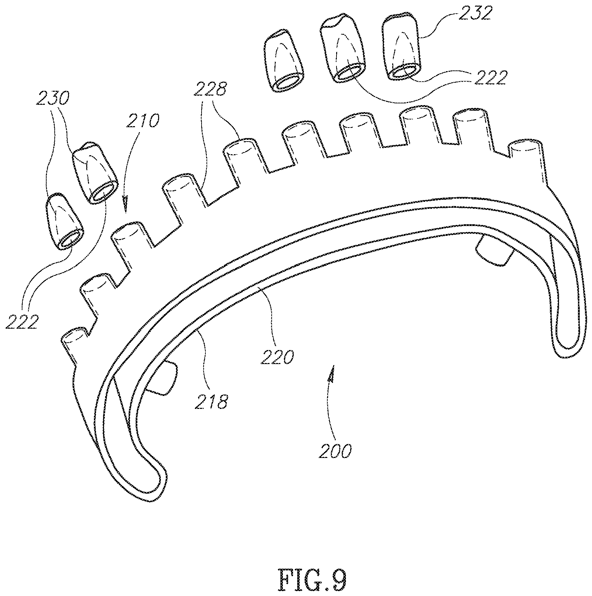

With reference to Fig.9, according to the invention, there is provided an anatomic removable superstructure generally designated **200,** comprising an anatomic crown portion generally designated **210** and configured at a proximal face **218** thereof with an integral bar-receiving groove **220,** being generally arced and shaped and sized so as to snugly fit, at high precision, over at least a portion of the corresponding support bar **20** as discussed herein above in connection with the previous examples. However, the anatomic crown portion **210** comprises a plurality of distally-projecting crown supports **228** (stud like projections), configured for fitting thereon a visible layer in the form of individual crowns **230** and/or bridges **232**. The crowns **230** and the bridge **232** mimic the actual appearance of the individuals' teeth as far as shape, size and color.

It is appreciated that the projections supports **228** can be configured in any shape and size, and suited for securing thereto the crowns and/or bridge, though as disclosed herein above, the visible layer can be also a combination of crowns and bridges as well as coatings applied over the projections supports **228**, the coating mimicking the appearance of the individual's natural parameters as far as color, texture, etc.

It is appreciated that the removable superstructure can also be partially of the first configuration disclosed hereinabove (e.g., as described above with reference to Figs. 1A through 3B) and partially configured as an anatomic removable superstructure (e.g., as described above with reference to Figs. 8A through 9), or in combinations thereof, such that for example portions of the removable superstructure are anatomic and other portions are non-anatomic.

In the configuration relating to the anatomic removable superstructure, either the personalized configuration of Figs. 8 or the general configuration of Fig. 9, the visible layer, i.e., crowns and/or bridges can be applied directly over the crown portion, or over a structural layer facilitating a skeleton (**222** in Fig 9), made for example of metallic or non-metallic material (such as gold, titanium, chrome cobalt, zirconium, alumina oxide, etc.) and serving as a skeleton for the aesthetic crown or bridge, wherein the skeleton is then mounted over the crown portion (or projections) and fixed thereto, e.g., by bonding, fasteners, etc. The aesthetic crown or bridge can be made, for example, of acrylic materials, polymers and the like, ceramic materials, zirconium, etc, and it resembles the natural parameters of the individual.

Those skilled in the art to which this invention pertains will readily appreciate that numerous changes, variations and modifications can be made without departing from the scope of the invention *mutatis mutandis.*

## Claims

1. A dental bridge system comprising a superstructure (200) and a support bar configured for fixedly securing to a jaw bone of an individual directly over fixtures or indirectly over abutments, said superstructure (200) comprising:
a proximal face (218) formed with at least one bar-receiving groove (220) shaped so as to snugly receive therein at least a corresponding portion of said support bar; and
a crown portion (230) defining teeth-like members and having a structurally functional, distally projecting inner core, coated by a visible layer configured to impart aesthetic qualities to said crown portion;
wherein said superstructure comprises a plurality of distally-projecting crown supports (228) and corresponding crowns (230), each crown comprising a portion of said inner core and being coated
by a portion of said visible layer.

2. The dental bridge system according to claim 1, wherein said aesthetic qualities comprise dental parameters of the individual.

3. The dental bridge system according to claim 2, wherein said dental parameters comprise at least one selected from the group consisting of color and texture.

4. The dental bridge system according to any one of the preceding claims, wherein said inner core is designed non-aesthetically.

5. The dental bridge system according to any one of the preceding claims, wherein the appearance of the inner core is visually distinct from said coating.

6. The dental bridge system according to claim 5, wherein the color of said inner core is different from that of said coating.

7. The dental bridge system according to any one of the preceding claims, being designed to be fit to the individual such that when said support bar is fully received within the groove (220), said superstructure (200) extends to the gum line of the individual.

8. The dental bridge system according to any one of claims 1 through 6, being designed to be fit to the individual such that when said support bar is fully received within the groove (220), said superstructure (200) extends past the gum line of the individual.

9. The dental bridge system according to claim 8, wherein said superstructure (200) fully covers the gingival mucosa of the individual.

10. The dental bridge system according to any one of the preceding claims, further comprising a locking arrangement (70) for locking the superstructure to said support bar.

11. The dental bridge system according to any one of the preceding claims, wherein said superstructure (200) further comprises a gum-mimicking portion (46).

## Patentansprüche

1. Zahnbrückensystem, umfassend eine Suprastruktur (200) und eine Trägerstange, die dafür konfiguriert ist, fest an einem Kieferknochen einer Person direkt über Fixturen oder indirekt über Abutments fixiert zu werden, wobei die Suprastruktur (200) umfasst:
eine proximale Fläche (218), ausgebildet mit zumindest einer Rille (220) zur Aufnahme der Stange, die gestaltet ist, um in ihrem Inneren zumindest einen entsprechenden Abschnitt der Trägerstange aufzunehmen; und
einen Kronenteil (230), der zahnartige Elemente definiert und einen strukturell funktionalen distal hervorstehenden inneren Kern aufweist,
der mit einer sichtbaren Schicht überzogen ist, die dafür konfiguriert ist,
dem Kronenteil ästhetische Eigenschaften zu verleihen;
wobei die Suprastruktur eine Vielzahl von distal hervorstehenden Kronenträgern (228) und entsprechenden Kronen (230) umfasst, wobei jede Krone einen Abschnitt des inneren Kerns umfasst und mit einem Abschnitt der sichtbaren Schicht überzogen ist.

2. Zahnbrückensystem nach Anspruch 1, wobei die ästhetischen Eigenschaften dentale Parameter der Person umfassen.

3. Zahnbrückensystem nach Anspruch 2, wobei die dentalen Parameter zumindest einen umfassen, der aus der Gruppe bestehend aus Farbe und Textur ausgewählt ist.

4. Zahnbrückensystem nach einem der vorhergehenden Ansprüche, wobei der innere Kern nichtästhetisch gestaltet ist.

5. Zahnbrückensystem nach einem der vorhergehenden Ansprüche, wobei das Aussehen des inneren Kerns visuell von dem des Überzugs verschieden ist.

6. Zahnbrückensystem nach Anspruch 5, wobei die Farbe des inneren Kerns von dem des Überzugs verschieden ist.

7. Zahnbrückensystem nach einem der vorhergehenden Ansprüche, das dafür ausgelegt ist, so an eine Person angepasst zu werden, dass sich, wenn die Trägerstange vollständig innerhalb der Rille (220) aufgenommen ist, die Suprastruktur (200) bis zum Zahnfleischrand der Person erstreckt.

8. Zahnbrückensystem nach einem der Ansprüche von 1 bis 6, das dafür ausgelegt ist, so an eine Person angepasst zu werden, dass sich, wenn die Trägerstange vollständig innerhalb der Rille (220) aufgenommen ist, die Suprastruktur (200) über den Zahnfleischrand der Person hinaus erstreckt.

9. Zahnbrückensystem nach Anspruch 8, wobei die Suprastruktur (200) die Zahnfleischschleimhaut der Person vollständig bedeckt.

10. Zahnbrückensystem nach einem der vorhergehenden Ansprüche, ferner umfassend eine Verriegelungsanordnung (70) zum Verriegeln der Suprastruktur an der Trägerstange.

11. Zahnbrückensystem nach einem der vorhergehenden Ansprüche, wobei die Suprastruktur (200) ferner einen das Zahnfleisch nachahmenden Abschnitt (46) umfasst.

## Revendications

1. Un système de bridge comprenant une superstructure (200) et une barre de support configurée pour s'ancrer de manière fixe à un os de mâchoire d'un individu directement sur des fixations ou indirectement sur des points d'appui,
ladite superstructure (200) comprenant :
une face proximale (218) formée avec au moins une rainure de réception de barre (220) conformée de manière à recevoir de façon ajustée au moins une portion correspondante de ladite barre de support, et
une portion de couronne (230) définissant des éléments en forme de dents et ayant un noyau interne structurellement fonctionnel, saillant distalement, revêtu d'une couche visible configurée pour conférer des qualités esthétiques à ladite portion de couronne ;
où ladite superstructure comprend une pluralité de supports de couronne saillant distalement (228) et de couronnes (230) correspondantes, chaque couronne comprenant une portion dudit noyau interne et étant revêtue d'une portion de ladite couche visible.

2. Le système de bridge selon la revendication 1, dans lequel lesdites qualités esthétiques comprennent des paramètres dentaires de l'individu.

3. Le système de bridge selon la revendication 2, dans lequel lesdits paramètres dentaires comprennent au moins un paramètre choisi dans le groupe constitué par la couleur et la texture.

4. Le système de bridge selon l'une quelconque des revendications précédentes, dans lequel ledit noyau interne est conçu de façon non esthétique.

5. Le système de bridge selon l'une quelconque des revendications précédentes, dans lequel l'aspect du noyau interne est visuellement distinct dudit revêtement.

6. Le système de bridge selon la revendication 5, dans lequel la couleur dudit noyau interne est différente de celle dudit revêtement.

7. Le système de bridge selon l'une quelconque des revendications précédentes, étant destiné à être adapté à l'individu de telle sorte que, lorsque ladite barre de support est entièrement reçue à l'intérieur de la rainure (220), ladite superstructure (200) s'étend jusqu'à la ligne de gencive de l'individu.

8. Le système de bridge selon l'une quelconque des revendications de 1 à 6, étant destiné à être adapté à l'individu de telle sorte que, lorsque ladite barre de support est entièrement reçue à l'intérieur de la rainure (220), ladite superstructure (200) s'étend au-delà de la ligne de gencive de l'individu.

9. Le système de bridge selon la revendication 8, dans lequel ladite superstructure (200) recouvre complètement la muqueuse gingivale de l'individu.

10. Le système de bridge selon l'une quelconque des revendications précédentes, comprenant en outre un système de blocage (70) pour bloquer la superstructure à ladite barre de support.

11. Le système de bridge selon l'une quelconque des revendications précédentes, dans lequel ladite superstructure (200) comprend en outre une portion d'imitation de la gencive (46).
